# FASCICULE DE BREVET EUROPEEN

(11) **EP 2 299 198 B1**
(45) Date de publication et mention de la délivrance du brevet: **13.06.2012**
(21) Numéro de dépôt: 10360035.9
(22) Date de dépôt: 26.08.2010
(51) Int. Cl.: F24H 1/00, E04H 4/12, F24J 2/42, F28D 1/02, F28D 1/06, F24D 3/14, F24D 3/16, F24H 7/02

(54) **Dispositif de chauffage et/ou de rafraichissement d'un volume de fluide contenu dans une enceinte, en particulier d'un volume d'eau contenu dans une piscine, et piscine équipée d'un tel dispositif**
Heiz-/Kühl-Einrichtung für das in einem Behälter enhaltete Fluidvolumen, insbesondere das Wasser eines Schwimmbeckens und Schwimmbecken mit einer solchen Einrichtung
Heating/cooling system for a volume of fluid contained in a container, in particular a volume of water contained in a swimming pool, and swimming pool equiped with such a system

(30) Priorité: 27.08.2009 FR 0955839
(43) Date de publication de la demande: 23.03.2011
(73) Titulaire: JYT SARL, 83520 Roquebrune sur Argens (FR)
(72) Inventeur: Comparon, Jean-Daniel, 68100 Mulhouse (FR)
(74) Mandataire: Nithardt, Roland

(56) Documents cités:
- EP-A1- 2 056 024
- CH-A5- 664 429
- DE-A1- 2 307 946
- DE-A1- 19 619 912
- DE-A1-102006 053 200
- DE-U1- 20 021 614
- DE-U1- 20 203 728
- FR-A1- 2 574 910
- JP-A- 57 169 553
- US-A- 4 284 059
- US-A1- 2008 010 736

## Description

### Domaine technique :

La présente invention concerne un dispositif de chauffage et/ou de rafraichissement d'un volume de fluide contenu dans une enceinte, en particulier d'un volume d'eau contenu dans une piscine, ledit dispositif comprenant au moins un circuit de chauffage et/ou de rafraichissement alimenté par des moyens de chauffage et/ou refroidissement et agencé pour être disposé le long au moins du fond de ladite enceinte.

### Technique antérieure :

Pour chauffer l'eau d'une piscine, l'on connaît à l'heure actuelle différentes techniques qui se distinguent les unes des autres tant par le type d'énergie utilisée que par les coûts d'investissements et de fonctionnement. L'utilisation d'une pompe à chaleur représente une solution couramment employée, qui repose sur le principe d'un transfert de calories de l'atmosphère vers l'eau de la piscine. Si un tel dispositif de chauffage de piscine est réputé pour son coût de fonctionnement attractif et son caractère écologique, il présente néanmoins quelques inconvénients. Ainsi, son rendement est directement lié à la température moyenne extérieure, et sera d'autant plus faible que l'air sera froid. En cas de faibles valeurs de température de l'air, la pompe à chaleur ne restitue plus aucune calorie à l'eau de la piscine, et à l'extrême, bascule même en mode de production de froid pour parer à tout risque d'endommagement de certains de ses éléments constitutifs. Le couplage d'une pompe à chaleur avec un autre type de chauffage, capable de prendre le relais en cas de mauvaises conditions climatiques, peut donc s'avérer nécessaire.

Par ailleurs, pour permettre à une pompe à chaleur de récupérer les calories présentes dans l'air, un fort brassage atmosphérique s'impose. Il est donc préférable que la pompe à chaleur soit installée à l'extérieur, dans un endroit dégagé qui n'entrave pas l'évacuation de l'air rejeté. Ceci implique de disposer d'un espace approprié, à proximité immédiate de la piscine, qui n'est pas très satisfaisant d'un point de vue esthétique dans un jardin, et génère du bruit. L'installation d'une pompe à chaleur pour piscine dans un local fermé est envisageable, mais nécessite un surcoût d'installation.

Une autre solution proposée à l'heure actuelle pour chauffer une piscine est encore définie par un réchauffeur électrique, constitué essentiellement d'un tube et d'une résistance électrique. L'eau de la piscine est mise en circulation dans le tube et se réchauffe au contact de la résistance électrique. Ce type de dispositif présente l'inconvénient de consommer une quantité importante d'énergie, et ne permet, de surcroît, qu'une montée en température lente de l'eau de la piscine. Il est par conséquent uniquement préconisé dans le cas d'une utilisation ponctuelle.

Une variante d'un tel dispositif, dans laquelle le rayonnement solaire remplace l'énergie électrique pour chauffer l'eau de la piscine, est commercialisée à l'heure actuelle. Elle est matérialisée par un tapis solaire, par exemple en élastomère noir, raccordé au système de filtration de la piscine et présentant des tubulures dans lesquelles circule l'eau de la piscine. Ce tapis est destiné à être déroulé sur une surface plane et ensoleillée du jardin à proximité de la piscine, de sorte que l'eau présente dans les tubulures soit chauffée par le soleil avant d'être réintroduite dans le bassin. Une autre variante d'un tel dispositif est décrite dans la publication US 4 385 624 qui concerne un système de chauffage de l'eau d'une piscine dans lequel cette même eau est mise en circulation, au moyen d'une pompe, au travers d'une série de tuyaux montés en spirale sur un support de forme conique, lui-même assemblé sur une plate-forme extérieure à la piscine de telle sorte qu'au moins une partie des tuyaux soit exposée au soleil pendant toute la journée. Bien qu'évitant le problème du coût d'une consommation importante d'énergie, les deux dispositifs précédemment décrits nécessitent de disposer d'une importante surface hors sol pour le tapis solaire ou la plate-forme, ne permettent de chauffer que de faibles quantités d'eau par rapport au volume total de la piscine et donnent lieu à des déperditions intempestives de chaleur, lors de la réintroduction du volume d'eau chauffé dans celui de la piscine.

Il est encore courant d'utiliser une chaudière pour la production d'eau chaude destinée à être introduite dans une piscine lorsqu'une baisse de la température de son eau est détectée. La publication GB 2 220 261, par exemple, décrit un système dans lequel un réservoir d'eau, chauffé au moyen d'une chaudière à gaz, est relié aux différents bassins d'une piscine. Un capteur de température, immergé dans chaque bassin, provoque l'ouverture de valves reliées au réservoir lorsque la température de l'eau baisse, et la distribution d'eau chaude dans les zones concernées. Un tel dispositif non seulement requiert une quantité importante d'énergie pour la production de l'eau chaude, mais se caractérise en outre par une déperdition intempestive d'énergie, du fait d'une introduction localisée d'un faible volume d'eau chaude dans un grand volume d'eau moins chaude suivie d'un brassage pour homogénéiser la température finale au sein du bassin.

D'autres solutions existent encore mais ne sont pas satisfaisantes. La publication FR 2 574 910 propose une couverture chauffante disposée à la surface de l'eau de la piscine et comportant un ou plusieurs tuyaux dans lesquels circule de l'eau, réchauffée par effet de serre sous l'effet d'une exposition au soleil. Dans ce système, la majeure partie des calories produites s'évacue dans l'atmosphère. La publication US 4 284 059 qui constitue l'état de la technique le plus proche, propose un matelas chauffant, qui peut être disposé au fond de la piscine, sur ses parois ou en couverture, et comporte une tubulure formant un unique serpentin dans lequel circule de l'eau réchauffée par des capteurs solaires ou une chaudière. La publication EP 2 056 024 décrit un dispositif de chauffage au sol comportant plusieurs modules de chauffage noyés dans la surface à chauffer, chaque module comprenant un support en forme de nappe équipé d'un unique serpentin chauffant, lesdits modules pouvant être superposés et décalés pour multiplier la densité de serpentins par unité de surface. Enfin, la publication US 2008/0010736 propose un unique serpentin de chauffage noyé dont le fond d'une piscine et dans lequel circule un liquide caloporteur relié à des moyens de régulation thermique pour chauffer ou refroidir l'eau de la piscine, en fonction des besoins. Dans toutes ces solutions, le rendement thermique est très faible. En circulant dans un seul serpentin qui s'étend de l'entrée à la sortie de l'échangeur et parcourt toute la surface de la piscine, le liquide caloporteur perd rapidement ses calories, qui sont instantanément absorbées par l'eau de la piscine. L'eau de la piscine est par conséquent plus chaude du côté de l'entrée de l'échangeur qu'à l'opposé, provoquant un différentiel de température conséquent entre l'entrée et la sortie de l'échangeur et nécessitant une puissance de chauffe importante.

### Exposé de l'invention :

La présente invention a pour objectif d'apporter une solution aux différents problèmes évoqués précédemment et propose à cet effet un dispositif de chauffage
d'un volume de fluide contenu dans une enceinte, en particulier d'un volume d'eau contenu dans une piscine, présentant un excellent rendement thermique, pouvant être
fabriqué de manière industrielle, facile à installer, et apte à être alimenté par tout type de sources d'énergie en particulier celles répondant à l'ensemble des normes ou
réglementations actuellement en vigueur aussi bien dans le domaine des piscines que celui de la protection de l'environnement.

Dans ce but, l'invention concerne un dispositif de chauffage tel que défini dans la revendication 1.

Une telle invention permet avantageusement de profiter d'une propriété physique classique, définie par le fait que la chaleur se diffuse naturellement et spontanément d'une zone chaude vers une zone froide. La mise en oeuvre du dispositif selon l'invention permet ainsi d'assurer un chauffage particulièrement régulier et homogène du fluide contenu dans une enceinte, du simple fait du rayonnement émis par le circuit de chauffage.

Le fait d'équiper le présent dispositif d'une pluralité de serpentins permet avantageusement de répartir la chaleur sur une large surface, de minimiser les déperditions de chaleur entre les orifices d'entrée et de sortie du liquide caloporteur et par conséquent d'améliorer le rendement du dispositif de chauffage. Le fait de configurer le dispositif en nappe s'étendant sur toute la surface du fond de l'enceinte permet d'améliorer encore davantage l'efficacité du chauffage grâce à une diffusion de chaleur simultanée sur l'ensemble de la surface de l'enceinte.

D'autre part, selon l'invention, le ou lesdits serpentins sont définis par des tuyaux flexibles, présentant un diamètre intérieur choisi en fonction du volume de ladite enceinte, réalisés notamment en matière synthétique telle que du PVC, et pouvant être liés audit support par collage, soudure, thermocollage, thermosoudage, rivetage, couture, clippage ou tout autre mode de fixation compatible. Le support peut s'étendre sur toute la surface de la nappe et être réalisé dans un matériau flexible choisi dans le groupe comprenant une grille, un voile tissé ou non tissé, ou être réparti ponctuellement à la surface de la nappe et constitué d'éléments de liaison flexibles par exemple en matériau synthétique et préformés pour s'assembler auxdits serpentins.

De manière préférentielle, chaque serpentin est constitué d'un tuyau de chauffage mis en forme selon un dessin comportant des boucles consécutives en zigzag, les brins de tuyau consécutifs étant sensiblement parallèles et séparés d'un pas prédéterminé qui peut être fixe et d'une valeur choisie entre 20 et 30 cm. Dans ce cas, les éléments de liaison préformés comportent des logements aptes à recevoir lesdits tuyaux, l'intervalle entre deux logements consécutifs correspondant audit pas.

Selon les variantes de réalisation, chaque serpentin peut comporter un robinet sur au moins un de ses orifices d'entrée ou de sortie agencé pour ajuster le débit de fluide caloporteur dans ledit serpentin.

La présente invention concerne également une piscine caractérisée en ce qu'elle comporte un dispositif de chauffage du type décrit précédemment s'étendant au moins le long de son fond, soit sur la face interne, soit sur la face externe de ce fond. Il peut aussi être intégré dans une dalle agencée pour former le fond de la piscine.

Dans tous les cas, ledit dispositif de chauffage peut être recouvert d'une couche d'un matériau durcissable, d'une chape de béton ou d'un voile d'un matériau soudé, pour lier intimement ledit dispositif audit fond. Cette couche peut avantageusement être mise en place aussi bien au niveau d'une piscine en cours de construction que d'une piscine déjà installée et autorise par conséquent, dans ce dernier cas de figure, le remplacement d'un moyen de chauffage de type classique par un dispositif selon l'invention, lorsque cela est souhaité.

Enfin, ladite piscine comporte de préférence une couche d'un matériau thermiquement isolant disposée sous ledit dispositif de chauffage pour l'isoler du sol.

### Description sommaire des dessins:

La présente invention et ses avantages apparaîtront mieux dans la description suivante de plusieurs modes de réalisation donnés à titre d'exemples non limitatifs, en référence aux dessins annexés, dans lesquels:
- la figure 1 est une vue en plan d'une première forme de réalisation du dispositif de chauffage et/ou de rafraichissement selon l'invention,
- la figure 2 est une vue schématique de dessus d'une piscine en dur dont le fond est équipé, sur sa face interne, du dispositif de la figure 1,
- la figure 3 est une vue de dessous en perspective d'une coque de piscine dont le fond est équipé, sur sa face externe, du dispositif de la figure 1,
- la figure 4 est une vue similaire à la figure 3, montrant comment le dispositif selon l'invention est assemblé au fond de ladite coque de piscine,
- la figure 5 est une vue en plan d'une seconde forme de réalisation du dispositif de chauffage et/ou de rafraichissement selon l'invention, reliée à des moyens de chauffage et/ou de refroidissement,
- la figure 6 est une vue en perspective d'une piscine hors sol destinée à être posée sur le dispositif de la figure 5,
- la figure 7 est une vue en plan d'une troisième forme de réalisation du dispositif de chauffage et/ou de rafraichissement selon l'invention, et
- la figure 8 est une vue de détail des moyens de fixation des tubes du dispositif de la figure 7.

### Illustration de invention et différentes manières de la réaliser:

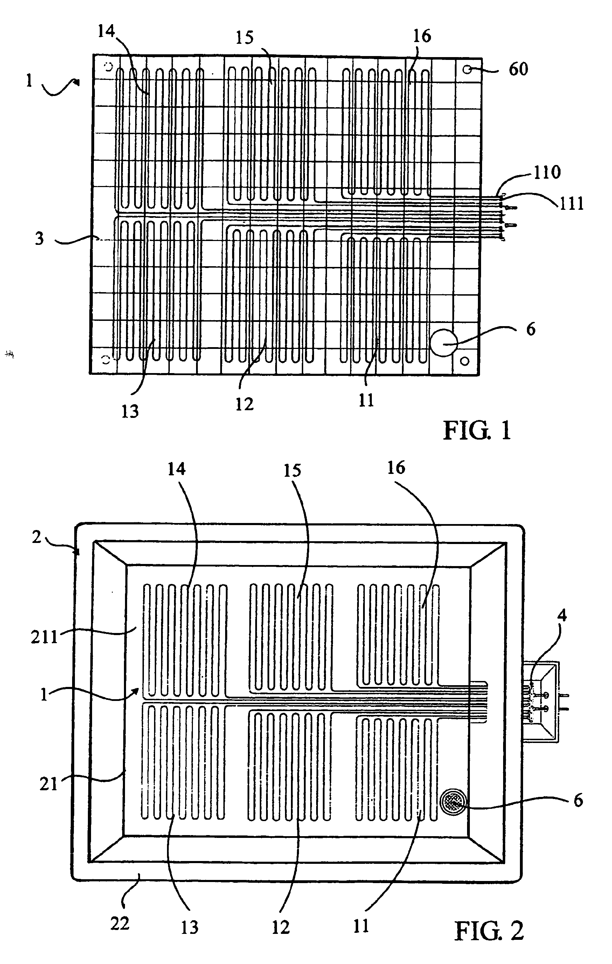

Le dispositif de chauffage et/ou de rafraichissement 1 selon l'invention tel que représenté sur les figures 1 à 4 présente une forme adaptée à une installation au niveau du fond 21 d'une piscine 2, 2' de forme sensiblement parallélépipédique. Cet exemple n'est pas limitatif. Ce dispositif peut s'étendre aux parois latérales et la piscine peut présenter toute autre forme géométrique et complexe. De même, le dispositif de chauffage et/ou de rafraichissement 1 de l'invention peut être étendu à tout type d'application dans laquelle il est nécessaire de chauffer et/ou de refroidir ou rafraîchir un volume de fluide qui peut être de l'air, de l'eau ou autre, contenu dans une enceinte délimitée par des parois qui peut être un bâtiment, une pièce, un réservoir de fluide, un bassin, une piscine ou autre. Dans la suite du texte, on utilise le terme « chauffage » pour simplifier la description, mais il sous-entend également les termes « rafraichissement » ou « refroidissement ».

En référence à la première forme de réalisation illustrée par les figures 1 à 4, le dispositif 1 comporte plusieurs serpentins, par exemple six serpentins 11, 12, 13, 14, 15, 16 disposés sur un support 3 pour former une nappe. La forme et les dimensions du support 3 sont sensiblement équivalentes à ceux du fond 21 de la piscine 2, 2'. Ce support 3 peut être formé d'une grille en un matériau synthétique flexible de type notamment PVC ou en un matériau métallique de type fil de fer, d'un voile plus ou moins ajouré, tissé ou non-tissé, ou de tout support souple équivalent, de manière à permettre l'enroulement du dispositif 1 pour en faciliter la manutention et le transport.

Le dessin formé par les serpentins 11, 12, 13, 14, 15, 16, qui sont maintenus sur ledit support par exemple par thermosoudage, collage, clippage, couture, sertissage, ou tout autre moyen de fixation adapté, respecte la forme parallélépipédique du support 3, et en recouvre l'ensemble de la surface. Le but recherché est de recouvrir au maximum la surface du fond 21 de ladite piscine 2, 2' de serpentins 11-16 montés en parallèle sur un circuit de fluide caloporteur, qui est de préférence un circuit fermé. Ces serpentins 11-16 forment des radiateurs de petites dimensions dans lesquels le débit et le renouvellement du fluide caloporteur est très rapide. La surface à chauffer est ainsi découpée en plusieurs zones de chauffage ou zones chauffantes adjacentes, chacune correspondant à un serpentin, ces zones étant aptes à s'échauffer rapidement et simultanément, pour chauffer de manière homogène toute la masse d'eau de la piscine.

Chacun des six serpentins 11, 12, 13, 14, 15, 16 présente respectivement un orifice d'entrée et un orifice de sortie, dont une paire seulement a été référencée 110, 111 sur la figure 1 pour des raisons de clarté, entre lesquels circule un fluide caloporteur, tel que par exemple de l'eau avec ou sans additif, ou tout autre fluide de préférence antibactérien et antigel. Les orifices d'entrée 110 et de sortie 111, sont raccordés en parallèle sur un collecteur 4 pouvant comporter ou également faire office de répartiteur, lui-même relié à des moyens de chauffage et/ou de refroidissement, non représentés aux figures 1 à 4, du fluide caloporteur.

Les serpentins 11, 12, 13, 14, 15, 16 peuvent, par exemple, être définis par des tuyaux de chauffage au sol de type classique, sélectionnés en fonction de leur diamètre, qui doit être adapté au volume d'eau contenue dans la piscine 2, 2'. En tout état de cause, ce diamètre ne doit de préférence pas être inférieur à 12 mm, pour que la quantité de fluide caloporteur circulant à l'intérieur des serpentins 11, 12, 13, 14, 15, 16 soit considérée comme suffisante.

Le fait d'équiper le dispositif de chauffage 1 selon l'invention de six serpentins 11, 12, 13, 14, 15, 16, permet de lui conférer six zones chauffantes présentant comparativement des températures sensiblement identiques. Ainsi, la chaleur diffusée par conduction thermique par le dispositif de chauffage 1 vers la masse d'eau contenue dans la piscine 2, 2', depuis son fond 21 vers son bord 22, est sensiblement la même sur l'ensemble de la surface qu'il occupe, laquelle correspond avantageusement, dans le cas de figure, à la surface de la piscine 2, 2'. Bien entendu, le nombre de serpentins et donc de zones chauffantes est variable et déterminé en fonction de la surface au sol de la piscine et du volume d'eau qu'elle contient.

En outre, le fait d'utiliser une pluralité de serpentins 11, 12, 13, 14, 15, 16 permet également de limiter de manière notable la déperdition d'énergie que subit le fluide caloporteur en circulant entre un orifice d'entrée 110 et un orifice de sortie 111, la distance parcourue par le fluide caloporteur étant plus courte que si un seul serpentin était utilisé. Par conséquent, la surface occupée par les serpentins, ainsi que leur nombre, représentent des caractéristiques permettant d'atteindre un des objectifs de l'invention, à savoir améliorer de manière substantielle le rendement thermique du procédé de chauffage d'une piscine.

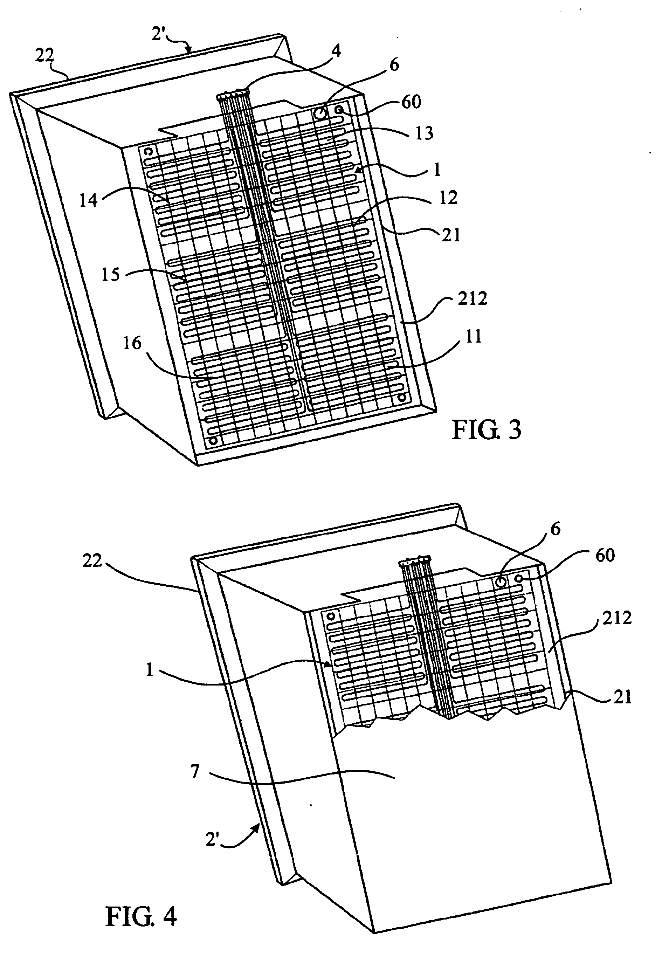

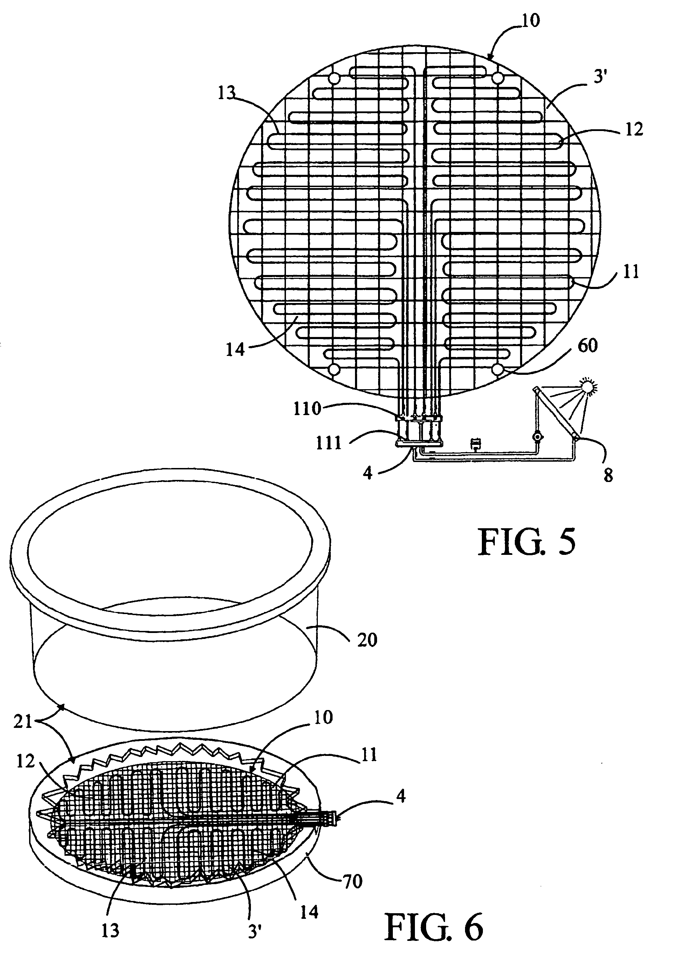

Tel que visible sur les figures 2, 3 et 4, le support en nappe 3 supportant les six serpentins 11, 12, 13, 14, 15, 16 peut être disposé soit sur la face interne 211 du fond 21 de la piscine 2 dans le cas d'une piscine enterrée traditionnelle, soit sur la face externe 212 du fond 21 de la piscine 2' dans le cas d'une coque de piscine par exemple en polyester. Le dispositif de chauffage 1 selon l'invention peut au choix être intégré à la piscine lors de sa fabrication notamment dans le cas d'une coque de piscine 2' en polyester ou similaire (cf. fig. 3 et 4), être installé sur la face interne 211 du fond 21 d'une piscine 2 traditionnelle déjà enterrée (cf. fig. 2) ou faire partie d'une dalle destinée à former le fond 21 d'une piscine 2 traditionnelle en cours de construction, ou encore faire partie d'une dalle apte à recevoir une piscine 20 hors sol par exemple gonflable ou autoportée (cf. fig. 5 et 6).

Dans le mode de réalisation représenté aux figures 3 et 4, le dispositif de chauffage 1 est convenablement disposé sur la face externe 212 du fond 21 d'une piscine 2', qui peut être une coque en polyester, au moyen de quatre plots de centrage 60, puis recouvert d'une couche 7 d'une résine thermodurcissable, telle que par exemple du polyester, ou tout autre matériau adapté pour assurer une liaison intime entre le dispositif de chauffage 1 et la face externe 212 de la piscine 2', ainsi qu'une bonne conductivité thermique. Un tel surmoulage permet avantageusement d'obtenir simultanément la solidarisation du dispositif de chauffage 1 à la piscine 2' et son intégration à la structure de cette dernière. Bien entendu, le surmoulage peut également être effectué lorsque le dispositif de chauffage 1 est installé sur la face interne 211 du fond 21 de la piscine 2 comme cela est représenté sur la figure 2. Dans le cas d'une piscine déjà enterrée, il est notamment possible, suivant la nature du matériau dont est constitué le fond 21, soit de couler une chape en béton, soit d'utiliser une résine thermodurcissable, soit encore de recourir à un voile d'un matériau soudé par laser, ou tout autre moyen équivalent, pour recouvrir le dispositif de chauffage 1 et créer un double fond sur lequel reposera le liner.

Dans le cas d'une piscine 2 traditionnelle en cours de construction, le dispositif de chauffage 1 est intégré dans une dalle avant le montage des parois de la piscine 2 puis la pose du liner. Dans tous les cas, il est préférable d'isoler le dispositif de chauffage 1 du sol par une couche d'isolant thermique tel que par exemple des plaques de polystyrène de plusieurs centimètres d'épaisseur interposées entre les fondations et le chape de la dalle, afin d'éviter les déperditions thermiques en direction du sol.

En outre, il est également possible de fixer préalablement le dispositif de chauffage 1 au niveau d'une face interne 211 ou externe 212 du fond 21 d'une piscine 2, 2' par tout moyen approprié, par exemple vissage, collage, sertissage, etc. avant de procéder à un surmoulage aux fins de finition. Par ailleurs, tel que visible sur les figures 1 à 4, le dispositif de chauffage 1 est avantageusement équipé d'un orifice 6, apte à communiquer avec une bonde d'évacuation de l'eau de la piscine 2 dont est muni le fond 21 de cette dernière.

Les figures 5 et 6 se rapportent à une autre variante de l'invention dans laquelle un dispositif de chauffage 10 est prévu pour équiper une piscine de forme circulaire 20 , par exemple une piscine 20 hors sol qui peut être gonflable, autoportée ou similaire. Le dispositif de chauffage 10 comprend à cet effet un support 3' pour former une nappe circulaire, et dont les dimensions sont prévues sensiblement équivalentes à celle de la piscine 20 concernée. Quatre serpentins 11, 12, 13, 14, sont disposés sur le support 3' de sorte que le dessin qu'ils forment respecte la forme circulaire dudit support et que la surface occupée par ce dessin corresponde à celle dudit support sensiblement égale au fond 21 de la piscine 2'. Leurs orifices d'entrée et de sortie, dont seule la paire 110, 111 est représentée, sont raccordés en parallèle sur un collecteur-répartiteur 4, lui-même relié, au travers de moyens adéquats, à un ensemble de capteurs solaires 8 aptes à permettre le réchauffement du fluide caloporteur circulant simultanément dans les quatre serpentins 11-14. Bien entendu les capteurs solaires 8 peuvent être remplacés ou combinés à tout autre moyen de chauffage et/ou de refroidissement en fonction des besoins. L'utilisation de l'énergie solaire permet de réduire les frais liés à la consommation d'énergie et de répondre aux impératifs de certaines réglementations interdisant d'ores et déjà, comme en Suisse, le recours aux énergies fossiles pour chauffer l'eau contenue dans une piscine.

Comme dans l'exemple précédent, un tel dispositif de chauffage 10 peut être installé au niveau aussi bien de la face interne que de la face externe d'une piscine de forme circulaire, par le bais des mêmes moyens que ceux évoqués ci-dessus. En référence à la figure 6, ce dispositif de chauffage 10 peut également être intégré dans une dalle 70 apte à recevoir en appui plan une piscine 20 hors sol. Dans ce cas également, on veillera à isoler le dispositif de chauffage 10 du sol par un couche d'isolant thermique adapté lors de la construction de la dalle 70.

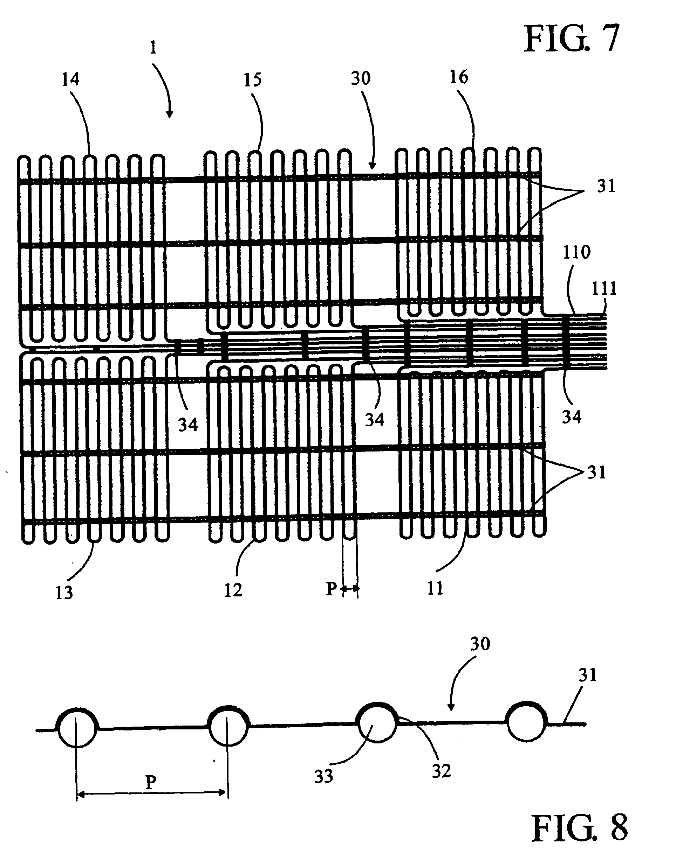

Les figures 7 et 8 illustrent un exemple de réalisation industrielle du dispositif de chauffage 1 des figures 1 à 4. Chaque serpentin 11-16 est configuré pour former un radiateur ou une zone chauffante pourvu d'une entrée 110 et d'une sortie 111 raccordées sur un répartiteur 4 commun apte à distribuer le fluide caloporteur en parallèle et simultanément dans tous les serpentins pour les raisons expliquées précédemment. Chaque serpentin 11-16 est donc fabriqué séparément par tout procédé approprié puis assemblé aux autres en partie ou en totalité, en usine ou sur chantier, selon les besoins. On peut opter pour un procédé manuel dans lequel l'opérateur déroule le tuyau de chauffage, le chauffe pour le ramollir et faciliter sa mise en forme et le met en forme autour d'un gabarit. Toutefois, ce type de tuyau est relativement rigide et sa manipulation fastidieuse. On préférera un procédé semi-automatique, voire automatique, dans lequel le tuyau de chauffage est déroulé par un robot, chauffé puis mis en forme autour d'un gabarit. Pour garantir l'efficacité thermique du dispositif, le dessin de chaque serpentin est de préférence formé de boucles en zigzag, parallèles et séparées d'un pas P relativement court, de l'ordre de 20 à 30 cm entre deux brins de tuyau parallèles et consécutifs d'un même serpentin. Ce pas P doit être suffisamment petit pour assurer une continuité thermique entre les brins des serpentins et le matériau de liaison utilisé pour lier intimement les serpentins à ladite piscine, sans pont thermique, et suffisamment grand pour garantir une surface d'échange thermique maximale entre lesdits brins des serpentins et ledit matériau de liaison. On peut utiliser le même pas P entre les serpentins adjacents.

Après fabrication, on assemble les serpentins 11-16 entre eux pour former une nappe au moyen d'un support 3, 3' s'étendant sur toute la surface de cette nappe, comme dans les exemples précédents, ou au moyen d'un support 30 s'étendant ponctuellement à la surface de cette nappe, ce support 30 pouvant être constitué d'une pluralité d'éléments de liaison 31 rapportés par clippage, soudage, couture, agrafage, rivetage, thermocollage, etc. sur lesdits serpentins à des endroits déterminés. Ces éléments de liaison 31 sont dans l'exemple représenté constitués de barrettes plus ou moins flexibles, préformées et pourvues de logements 32 formant des clips pour y recevoir les tuyaux de chauffage 33 des serpentins 11-16. Ces éléments de liaison 31 peuvent être simplement clippés perpendiculairement auxdits tuyaux 33, l'intervalle entre deux logements 32 consécutifs correspondant au pas entre deux brins de tuyaux 33 parallèles consécutifs desdits serpentins et formant une entretoise garantissant le respect dudit pas P pendant la manutention des serpentins. Des éléments de liaison complémentaires 34 sont utilisés pour lier les tuyaux d'alimentation des serpentins concentrés dans le couloir central de la nappe pour raccorder lesdits serpentins 11-16 au collecteur-répartiteur 4.

Le dispositif de chauffage 1 ainsi fabriqué peut être enroulé sur lui-même selon un axe d'enroulement parallèle aux tuyaux pour être stocké, transporté et manutentionné aisément. Selon ses dimensions, il peut être enroulé en plusieurs parties distinctes, réduisant encore le coût du stockage et du transport ainsi que le poids lors de la manutention, les différentes parties étant assemblées ensuite sur chantier par les éléments de liaison 31, 34. Il peut également être conditionné en plaques superposées, chaque serpentin maintenu par ses éléments de liaison 31 formant une plaque. Dans ce cas, les tuyaux d'alimentation sont raccordés aux serpentins sur chantier par des raccords rapides ou tout moyen équivalent et les éléments de liaison 31, 34 sont en plusieurs morceaux emboîtables bout à bout par exemple. Ainsi, le dispositif selon l'invention peut être proposé à la vente en kit pour être monté aussi bien par des professionnels que par des particuliers.

Le collecteur-répartiteur 4 peut être équipé sur chaque départ ou arrivée de serpentin d'un robinet permettant d'ajuster le débit de fluide caloporteur en fonction des besoins. Cette possibilité confère au dispositif de chauffage 1 une grande souplesse de régulation thermique de chaque zone chauffante en fonction de la surface à chauffer, dans la mesure où la piscine n'a pas une forme parallélépipédique et les serpentins n'ont de ce fait pas tous les mêmes dimensions, et/ou dans la mesure où certaines zones de la piscine ne bénéficient pas d'un même ensoleillement.

### Possibilités d'application industrielle:

Du fait de la nature des matériaux employés pour le fabriquer, choisis parmi des matériaux classiques, que l'on sait d'ores et déjà mettre en oeuvre dans d'autres applications, il est tout à fait envisageable de fabriquer un dispositif de chauffage 1, 10 selon l'invention de manière industrielle, à moindre coût.

Il ressort clairement de cette description que l'invention permet d'atteindre les buts fixés, à savoir une amélioration du rendement du procédé de chauffage d'une piscine quelle que soit le type d'énergie utilisée y compris l'énergie solaire, incontournable dans certains pays du fait de leurs règlementations. De même, il ressort clairement que le dispositif de chauffage de l'invention peut être étendu à des applications autres que celles de la piscine, car il peut être posé facilement et rapidement permettant des gains de main d'oeuvre sur chantier, tout en offrant des performances thermiques accrues.

La présente invention n'est pas limitée aux exemples de réalisation décrits mais s'étend à toute modification et variante évidentes pour un homme du métier tout en restant dans l'étendue de la protection définie dans les revendications annexées. Enfin et comme déjà expliqué, le dispositif de chauffage est facilement réversible pour produire du froid et rafraichir ou tempérer une piscine ou tout autre volume.

## Revendications

1. Dispositif de chauffage et/ou de rafraichissement (1, 10) d'un volume de fluide contenu dans une enceinte délimitée par des parois, en particulier d'un volume d'eau contenu dans une piscine (2), ledit dispositif comprenant au moins un circuit de chauffage et/ou de refroidissement alimenté par des moyens de chauffage et/ou de refroidissement, et agencé pour être disposé le long au moins du fond (21) de ladite enceinte (2), **caractérisé en ce que** ledit circuit de chauffage et/ou de refroidissement est lié à un support (3, 3', 30) pour former une nappe dont le pourtour et les dimensions sont adaptés à la forme de la surface dudit fond (21), **en ce que** ledit circuit comporte plusieurs serpentins (11, 12, 13, 14, 15, 16) pourvus chacun d'un orifice d'entrée (110) et d'un orifice de sortie (111) pour un fluide caloporteur communiquant avec un collecteur (4) apte à être relié auxdits moyens de chauffage et/ou de refroidissement, et **en ce que** lesdits serpentins (11-16) sont montés en parallèle sur ledit collecteur (4) et présentent des dimensions telles que la surface à chauffer ou rafraîchir est découpée en plusieurs zones chauffantes ou rafraîchissantes distinctes et adjacentes réparties sur la surface de ladite nappe, chaque zone correspondant à un serpentin (11-16), lesdites zones étant aptes à s'échauffer ou se rafraîchir rapidement et simultanément et présentant comparativement des températures sensiblement identiques pour chauffer ou rafraîchir de manière homogène toute la masse d'eau de la piscine.

2. Dispositif selon la revendication 1, **caractérisé en ce que** lesdits serpentins (11, 12, 13, 14, 15, 16) sont définis par des tuyaux de chauffage flexibles.

3. Dispositif selon la revendication 1, **caractérisé en ce que** lesdits serpentins (11, 12, 13, 14, 15, 16) comportent au moins un moyen de fixation audit support (3, 3', 30) choisi parmi le collage, la soudure, le thermocollage, le thermosoudage, le rivetage, la couture, le clippage.

4. Dispositif selon l'une quelconque des revendications précédentes, **caractérisé en ce que** ledit support (3, 3') s'étend sur toute la surface de la nappe et est réalisé dans un matériau flexible, choisi dans le groupe comprenant une grille, un voile tissé ou non tissé.

5. Dispositif selon l'une quelconque des revendications 1 à 4, **caractérisé en ce que** ledit support (30) s'étend ponctuellement à différents endroits de la nappe et est constitué d'éléments de liaison (31) flexibles.

6. Dispositif selon l'une quelconque des revendications précédentes, **caractérisé en ce que** chaque serpentin (11-16) est constitué d'un tuyau de chauffage mis en forme selon un dessin comportant des boucles consécutives en zigzag, les brins de tuyau consécutifs étant sensiblement parallèles et séparés d'un pas (P) prédéterminé.

7. Dispositif selon la revendication 6, **caractérisé en ce que** ledit pas (P) prédéterminé est fixe et a une valeur choisie entre 20 et 30 cm.

8. Dispositif selon la revendication 5 et 6, **caractérisé en ce que** lesdits éléments de liaison (31) sont préformés et comportent des logements (32) aptes à recevoir lesdits tuyaux, l'intervalle entre deux logements consécutifs correspondant audit pas (P).

9. Dispositif selon l'une quelconque des revendications précédentes, **caractérisé en ce que** chaque serpentin (11-16) comporte un robinet sur au moins un de ses orifices d'entrée ou de sortie agencé pour ajuster le débit de fluide caloporteur dans ledit serpentin.

10. Piscine (2, 2', 20) **caractérisée en ce qu'**elle comporte un dispositif de chauffage (1, 10) selon l'une quelconque des revendications précédentes s'étendant au moins le long de son fond (21).

11. Piscine selon la revendication 10, **caractérisée en ce que** ledit dispositif de chauffage (1) est disposé du côté de la face interne (211) dudit fond (21).

12. Piscine selon la revendication 10, **caractérisée en ce que** ledit dispositif de chauffage (1) est disposé du côté de la face externe (212) dudit fond (21).

13. Piscine selon la revendication 10, **caractérisée en ce que** ledit dispositif de chauffage (1, 10) est intégré dans une dalle agencée pour former le fond (21) de ladite piscine (2, 20).

14. Piscine selon l'une quelconque des revendications 10 à 13, **caractérisée en ce qu'**elle comporte une couche (7) d'un matériau thermodurcissable, d'une chape de béton, ou d'un voile d'un matériau soudé, pour lier intimement ledit dispositif de chauffage (1, 10) audit fond (21).

15. Piscine selon l'une quelconque des revendications 10 à 14, **caractérisée en ce qu'**elle comporte une couche d'un matériau thermiquement isolant disposée sous ledit dispositif de chauffage (1, 10) pour l'isoler du sol.

## Claims

1. Heating and/or cooling system (1, 10) for a volume of fluid contained in a container delimited by walls, in particular a volume of water contained in a swimming pool (2), said system comprising at least one heating and/or cooling circuit fed by heating and/or cooling means, and arranged so as to be placed at least along the bottom (21) of said container (2), **characterized in that** said heating and/or cooling circuit is fastened to a support (3, 3', 30) to form a layer whose periphery and dimensions are adapted to the shape of the surface of said bottom (21), **in that** said circuit comprises several pipe coils (11, 12, 13, 14, 15, 16) provided each with an inlet opening (110) and an outlet opening (111) for a heat transfer fluid communicating with a manifold (4) that can be connected with said heating and/or cooling means, and **in that** said pipe coils (11-16) are mounted in parallel on said manifold (4) and have dimensions so that the surface to be heated or cooled is divided in several distinct and adjacent heating or cooling areas distributed on the surface of said layer, each area corresponding to a pipe coil (11-16), said areas being capable of heating up or cooling down quickly and simultaneously and having comparatively substantially identical temperatures to heat or cool homogeneously the whole water mass of the swimming pool.

2. System according to claim 1, **characterized in that** said pipe coils (11, 12, 13, 14, 15, 16) are defined by flexible heating pipes.

3. System according to claim 1, **characterized in that** said pipe coils (11, 12, 13, 14, 15, 16) comprise at least one means for fastening them on said support (3, 3', 30) chosen among gluing, welding, hot-melt gluing, thermowelding, riveting, sewing, clipping.

4. System according to any of the previous claims, **characterized in that** said support (3, 3') extends on the whole surface of the layer and is made out of a flexible material chosen in the group comprising a grid, a woven or non-woven fabric.

5. System according to any of claims 1 to 4, **characterized in that** said support (30) extends punctually at different locations of the layer an is made up of flexible connecting elements (31).

6. System according to any of the previous claims, **characterized in that** each pipe coil (11-16) is made up of a heating pipe shaped according to a pattern including consecutive zigzag loops, the consecutive pipe sections being substantially parallel and spaced by a predetermined pitch (P).

7. System according to claim 6, **characterized in that** said predetermined pitch (P) is fixed and has a value chosen between 20 and 30 cm.

8. System according to claims 5 and 6, **characterized in that** said connecting elements (31) are preformed and comprise seats (32) capable of receiving said pipes, the interval between two consecutive seats corresponding to said pitch (P).

9. System according to any of the previous claims, **characterized in that** each pipe coil (11-16) comprises a valve on at least one of its inlet or outlet openings arranged to adjust the heat transfer fluid flow in said pipe coil.

10. Swimming pool (2, 2', 20) **characterized in that** it comprises a heating system (1, 10) according to any of the previous claims extending at least along its bottom (21).

11. Swimming pool according to claim 10, **characterized in that** said heating system (1) is arranged on the side of the internal face (211) of said bottom (21).

12. Swimming pool according to claim 10. **characterized in that** said heating system (1) is arranged on the side of the external face (212) of said bottom (21).

13. Swimming pool according to claim 10. **characterized in that** said heating system (1, 10) is integrated in a slab arranged so as to form the bottom (21) of said swimming pool (2, 20).

14. Swimming pool according to any of claims 10 to 13, **characterized in that** it comprises a layer (7) made of a thermosetting material, a concrete floor screed or a covering out of a welded material, to bond said heating system (1, 10) intimately to said bottom (21).

15. Swimming pool according to any of claims 10 to 14, **characterized in that** it comprises a layer out of a thermally insulating material arranged underneath said heating system (1, 10) in order to insulate it from the soil.

## Patentansprüche

1. Heiz- und/oder Kühl-Einrichtung (1, 10) für das in einem durch Wände begrenzten Behälter enthaltene Fluidvolumen, insbesondere das Wasser eines Schwimmbeckens (2), wobei die besagte Einrichtung zumindest einen durch Heiz- und/oder Kühl-Mittel gespeisten Heiz- und/oder Kühl-Kreislauf beträgt, der ausgelegt ist, um entlang mindestens des Bodens (21) des besagten Behälters (2) angeordnet zu werden, **dadurch gekennzeichnet, dass** der besagte Heiz- und/oder Kühl-Kreislauf mit einer Unterlage (3, 3', 30) verbunden ist, um eine Matte zu bilden, deren Umfang und Abmessungen der Form der Fläche des besagten Bodens (21) angepasst sind, **dadurch**, dass der besagte Kreislauf mehrere Rohrschlangen (11, 12, 13, 14, 15, 16) beträgt, die jeweils eine Einlassöffnung (110) und eine Auslassöffnung (111) für ein Wärmeübertragungsmittel aufweisen und die mit einem Verteiler (4) in Verbindung stehen, der mit den besagten Heiz- und/oder Kühl-Mittel verbunden werden kann, und **dadurch**, dass die besagten Rohrschlangen (11-16) parallel an dem besagten Verteiler (4) angeschlossen sind und so bemessen sind, dass die zu heizende oder zu kühlende Fläche in mehrere unterschiedene und aneinander angrenzende, auf der Fläche der besagten Matte verteilte Heiz- oder Kühlbereiche aufgeteilt ist, wobei jeder Bereich einer Rohrschlange (11-16) entspricht, wobei die besagten Bereiche in der Lage sind, sich schnell und gleichzeitig aufzuwärmen oder abzukühlen und vergleichsweise merklich identische Temperaturen aufweisen, um die gesamte Masse des Schwimmbeckenwassers homogen aufzuwärmen oder abzukühlen.

2. Einrichtung nach Anspruch 1, **dadurch gekennzeichnet, dass** die besagten Rohrschlangen (11, 12, 13, 14, 15, 16) aus flexiblen Heizungsrohren bestehen.

3. Einrichtung nach Anspruch 1, **dadurch gekennzeichnet, dass** die besagten Rohrschlangen (111 12, 13, 14, 15, 16) mindestens ein Mittel zur Befestigung auf der besagten Unterlage (3, 3', 30) betragen, ausgewählt zwischen dem Kleben, dem Schweißen, dem Heißkleben, dem Thermoschweißen, dem Nieten, dem Nähen, der Befestigung mit Clips.

4. Einrichtung nach einem beliebigen der vorhergehenden Ansprüche, **dadurch gekennzeichnet, dass** die besagte Unterlage (3, 3') sich auf der ganzen Fläche der Matte erstreckt und aus einem flexiblen, in der Gruppe bestehend aus einem Gitter, einem gewebten oder nicht gewebtem Stoff ausgewählten Material hergestellt wird.

5. Einrichtung nach einem beliebigen der Ansprüche 1 bis 4, **dadurch gekennzeichnet, dass** die besagte Unterlage (30) sich punktuell in verschiedenen Orten der Matte erstreckt und aus flexiblen Verbindungs-Elementen (31) besteht.

6. Einrichtung nach einem beliebigen der vorhergehenden Ansprüche, **dadurch gekennzeichnet, dass** jede Rohrschlange (11-16) aus einem Heizungsrohr besteht, das nach einem Muster aus in Zickzack aufeinanderfolgenden Schleifen geformt wird, wobei die aufeinanderfolgenden Rohrabschnitte merklich parallel verlaufen und mit einen vorbestimmten Abstand (P) entfernt verlegt sind.

7. Einrichtung nach Anspruch 6, **dadurch gekennzeichnet, dass** der besagte vorbestimmte Abstand (P) fest ist und einen zwischen 20 und 30 cm gewählten Wert aufweist.

8. Einrichtung nach Ansprüchen 5 und 6, **dadurch gekennzeichnet, dass** die besagten Verbindungs-Elemente (31) vorgeformt sind und Aufnahmen (32) aufweisen, die die besagten Rohre aufnehmen können, wobei der Abstand zwischen zwei aufeinanderfolgenden Aufnahmen dem besagten Abstand (P) entspricht.

9. Einrichtung nach einem beliebigen der vorhergehenden Ansprüche, **dadurch gekennzeichnet, dass** jede Rohrschlange (11-16) auf mindestens einer seiner Einlass- oder Auslassöffnungen ein Ventil aufweist, das ausgelegt ist, um den Durchfluss des Wärmeübertragungsmittels in der besagten Rohrschlange einzustellen.

10. Schwimmbecken (2, 2', 20), **dadurch gekennzeichnet, dass** es eine Heizeinrichtung (1, 10) nach einem beliebigen der vorhergehenden Ansprüche beträgt, das sich mindestens entlang seines Bodens (21) erstreckt.

11. Schwimmbecken nach Anspruch 10, **dadurch gekennzeichnet, dass** die besagte Heizeinrichtung (1) auf der Seite der Innenfläche (211) des besagten Bodens (21) angeordnet ist.

12. Schwimmbecken nach Anspruch 10, **dadurch gekennzeichnet, dass** die besagte Heizeinrichtung (1) auf der Seite der Außenfläche (212) des besagten Bodens (21) angeordnet ist.

13. Schwimmbecken nach Anspruch 10, **dadurch gekennzeichnet, dass** die besagte Heizeinrichtung (1, 10) in einer Platte integriert ist, die ausgelegt ist, um den Boden (21) des besagten Schwimmbeckens (2, 20) zu bilden.

14. Schwimmbecken nach einem beliebigen der Ansprüche 10 bis 13, **dadurch gekennzeichnet, dass** es eine Schicht (7) aus einem wärmehärtenden Material, aus einem Beton-Estrich oder aus einer Abdeckung aus einem geschweißten Material beträgt, um die besagte Heizeinrichtung (1, 10) eng mit dem besagten Boden (21) zu verbinden.

15. Schwimmbecken nach einem beliebigen der Ansprüche 10 bis 14, **dadurch gekennzeichnet, dass** es eine unter der besagten Heizeinrichtung (1, 10) angeordnete Schicht aus einem Wärmedämmmaterial beträgt, um sie vom Boden zu isolieren.
